# EUROPÄISCHE PATENTANMELDUNG

(11) **EP 0 885 915 A2**
(43) Veröffentlichungstag der Anmeldung: **23.12.1998**
(21) Anmeldenummer: 98110603.2
(22) Anmeldetag: 10.06.1998
(51) Int. Cl.: C08G 77/26

(54) **Polyorganosiloxane mit Dialkoxyorganosiloxy-Gruppen**

(30) Priorität: 17.06.1997 DE 19725518
(71) Anmelder: Hüls Silicone Gesellschaft mit beschränkter Haftung, D-01610 Nünchritz (DE)
(72) Erfinder: Scheim, Uwe, Dr. rer. nat., 01640 Coswig (DE); Jenkner, Peter, Dr. rer. nat., 79618 Rheinfelden (DE); Lehnert, Robert, Dr. rer. nat., 01069 Dresden (DE)
(74) Vertreter: Zöllner, Gudrun

(57) **Zusammenfassung**

Die Erfindung betrifft Polyorganosiloxane mit Dialkoxyorganosiloxy-Gruppen, wobei der Organorest ein substituierter Amidoalkylrest ist.

## Beschreibung

Die Erfindung betrifft Polyorganosiloxane mit Dialkoxyorganosiloxy-Gruppen, wobei der Organorest ein substituierter Amidoalkylrest ist. Die erfindungsgemäßen Polydiorganosiloxane finden Anwendung in RTV1-Siliconkautschuk-Mischungen.

Unter Ausschluß von Wasser lagerfähige, bei Zutritt von Wasser bei Raumtemperatur zu Elastomeren vulkanisierende Einkomponenten-Siliconkautschukmischungen (RTV1) sind bekannt. Sie enthalten im allgemeinen ein polymeres, meist lineares Siloxan, eine vernetzend wirkende Verbindung, die leicht hydrolysierbare Gruppen enthalten muß, einen Weichmacher, der meist ein methylterminiertes Polydimethylsiloxan ist, und ggf. weitere Zusätze wie Härtungsbeschleuniger, Pigmente, Verarbeitungshilfsmittel und Füllstoffe. Die Vulkanisation der Mischungen kann sauer, z. B. bei Anwesenheit von Acetoxysilanen, basisch, z. B. mittels Aminosilanen, oder neutral, z. B. durch Verbindungen, die Oximo- oder Alkoxygruppen aufweisen, erfolgen. Neutral vernetzende RTV1-Systeme werden vor allem dann benötigt, wenn die bei der Aushärtung der Mischungen entstehenden Spaltprodukte den Untergrund nicht beeinflussen sollen, beispielsweise beim Verfügen von Beton oder metallischen Werkstoffen.

Normalerweise wird für die Formulierung von RTV1-Massen ein Polymer mit OH-Gruppen eingesetzt. Diese Verfahrensweise wird zum Beispiel bei acetat-, oxim- und aminvernetzenden Mischungen angewendet. Bei alkoxyvernetzenden Massen funktioniert diese Methode jedoch nicht, da beim Einsatz von OH-Endgruppenpolymeren die Massen bereits beim Mischen aushärten. Um das zu vermeiden, werden für alkoxyvernetzende RTV1-Systeme Polymere mit Alkoxyendgruppen eingesetzt. Ihre Herstellung ist bekannt und erfolgt im allgemeinen durch Umsetzung eines hydroxyterminierten Polydiorganosiloxanes einer bestimmten Viskosität mit Alkoxysilanen in Gegenwart von Katalysatoren. Während der dabei stattfindenden Kondensation (Abspaltung von Alkohol) wird das gewünschte Polymer gebildet. Üblicherweise werden für diese Umsetzung wegen der leichten Verfügbarkeit im technischen Maßstab und der höchsten Reaktivität α,ω-Dihydroxypolydimethylsiloxane eingesetzt (u. a. EP 137 883, EP 304 701, EP 559 045). Als Alkoxysilan wird üblicherweise Methyltrimethoxysilan eingesetzt. Darüber hinaus sind Verfahren bekannt, bei denen Verbindungen wie Aminopropyltrimethoxysilan, Aminoethylaminopropyltrimethoxysilan, Glycidoxypropyltrimethoxysilan und Methacryloxypropyltrimethoxysilan verwendet werden. Diese Verbindungen reagieren auch schon ohne Katalysator mit dem hydroxyterminierten Polydimethylsiloxan (DE 44 05 851).

Bei den beschriebenen Verfahren ist wesentlich, daß eine vollständige Umsetzung der OH-Endgruppen mit dem Alkoxysilan stattfindet. Verbleiben noch OH-Gruppen im Polymer, so kommt es beim Herstellen der RTV1-Mischung trotzdem zu einer vorzeitigen Vernetzung, die ja gerade durch die Umsetzung des OH-Endgruppenpolymers mit dem Alkoxysilan vermieden werden sollte. Nach den beschriebenen Verfahren werden aber nur beim Einsatz von Methoxysilanen Polymere erhalten, die keine restlichen OH-Gruppen mehr enthalten. Wegen der Toxizität von Methanol war es jedoch wünschenswert, Polymere mit anderen als Methoxy-Endgruppen, beispielsweise solche, die Ethoxy-Endgruppen tragen, herzustellen.

Bei den bisher bekannten Umsetzungen von hydroxyterminierten Poldiorganosiloxanen mit Ethoxysilanen läuft die Reaktion zwischen den OH-Gruppen und den Ethoxysilanen entweder nur unvollständig oder sehr langsam ab. Eine Ausnahme bilden Polymere, die Diethoxyhydrogensiloxy-Endgruppen tragen. Diese kann man zum Beispiel durch Umsetzung von hydroxyterminierten Polymeren mit Triethoxysilan herstellen (DE 41 13 554). Der Nachteil dieses Verfahrens besteht darin, daß das Triethoxysilans nur schwer handhabbar ist und beim Lagern sich in selbstentzündliche Verbindungen zersetzen kann. Außerdem besteht die Möglichkeit, daß sich bei der Lagerung der Polymere oder der daraus hergestellten fertigen RTV1-Mischungen Wasserstoff entwickelt.

Eine weitere Möglichkeit, Polysiloxane mit Ethoxy-Endgruppen zu erhalten, ist die Hydrosilylierung. So kann nach US 4 772 675 1-(2-Triethoxysilylethyl)-1,1,3,3-tetramethyldisiloxan, welches aus Vinyltriethoxysilan und 1,1,3,3-Tetramethyldisiloxan zugänglich ist, mit einem vinylterminierten Polydimethylsiloxan umgesetzt werden. US 4 962 174 beschreibt die Umsetzung eines H-terminierten Polydimethylsiloxanes mit Vinyltriethoxysilan. Darüber hinaus ist es möglich, ein hydroxyterminiertes Polydimethylsiloxan zunächst mit 1,1,3,3-Tetramethyldisiloxan in Gegenwart von Platinverbindungen unter Wasserstoffabspaltung zu einem H-terminierten Polymer umzusetzen, welches anschließend ebenfalls mit Vinyltriethoxysilan reagiert. Diese Verfahren benötigen jedoch stets Verbindungen mit Dimethylhydrogen-Gruppen als Ausgangsstoff, die schwer zugänglich sind bzw. deren Herstellung aufwendig ist.

Die Aufgabe der Erfindung bestand darin, Polyorganosiloxane mit Dialkoxyorganosiloxy-Gruppen bereitzustellen, welche als Polymere in alkoxyvernetzenden RTV1-Siliconkautschuk-Mischungen einsetzbar sind, wobei neben ethoxyvernetzenden Systemen aufgrund der Variabilität der gebundenen Alkoxygruppen verschiedene Vernetzungssysteme realisierbar sein sollen.

Gegenstand der Erfindung sind Polyorganosiloxane mit Dialkoxyorganosiloxy-Gruppen, wobei der Organorest ein substituierter Amidoalkylrest ist.

Die erfindungsgemäßen Polyorganosiloxane enthalten mindestens eine Dialkylorganosiloxy-Gruppe der allgemeinen Formel (I) 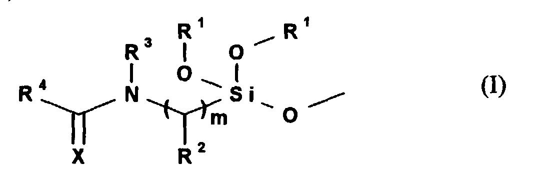 worin R¹ unabhängig voneinander unsubstituierte und/oder substituierte Alkyl- und/oder Silylreste, R² unabhängig voneinander unsubstituierte und/oder substituierte, gesättigte und/oder ungesättigte Alkyl- und/oder Arylreste und/oder Wasserstoff, R³ unsubstituierte oder substituierte, gesättigte oder ungesättigte Alkyl-, Aryl- oder Acylreste oder Wasserstoff, R⁴ unsubstituierte oder substituierte, gesättigte oder ungesättigte Alkyl- oder Arylreste oder Wasserstoff und X Sauerstoff oder Schwefel bedeuten, wobei die Reste R³ und R⁴ alicyclische oder heterocyclische Ringe bilden können, und m entweder 1 oder 2 ist.

Als Dialkoxyorganosiloxy-Gruppen der allgemeinen Formel (I) sind 1-(Pyrrolidin-2-on-1-yl)alkyldialkoxysiloxy- und/oder 2-(Pyrrolidin-2-on-1-yl)alkyldialkoxysiloxyreste sowie 1-(N-Methylacetamido)alkyldialkoxysiloxy- und/oder 2-(N-Methylacetamido)alkyldialkoxysiloxyreste bevorzugt.

Das Polyorganosiloxan mit Dialkoxyorganosiloxy-Gruppen entspricht beispielsweise der allgemeinen Formel (II)

(SiZR⁵₂O_{1/2})ₐ (SiZR⁵O_{2/2})_{b} (SiZO_{3/2})_{c} (SiR⁵₂O_{2/2})_{d} (SiR⁵O_{3/2})ₑ (SiO_{4/2})_{f} (II)

wobei R⁵ unabhängig voneinander unsubstituierte und/oder substituierte, gesättigte und/oder ungesättigte Alkyl- und/oder Arylreste und Z entweder R⁵ oder eine Dialkoxyorganosiloxy-Gruppe der allgemeinen Formel (I) mit der Maßgabe bedeutet, dass mindestens eine Dialkoxyorganosiloxy-Gruppe pro Molekül gebunden ist, a Werte von 1 bis 10, b und c unabhängig voneinander Werte von 0 bis 100, d Werte von 20 bis 2000 sowie e und f unabhängig voneinander Werte von 0 bis 100 annehmen. Die Polyorganosiloxane der allgemeinen Formel (II) können herstellungbedingt noch geringe Mengen an siliciumgebundenen Hydroxylgruppen aufweisen.

Bevorzugtes Polyorganosiloxan mit Dialkoxyorganosiloxy-Gruppen ist die Verbindung der allgemeinen Formel (III) 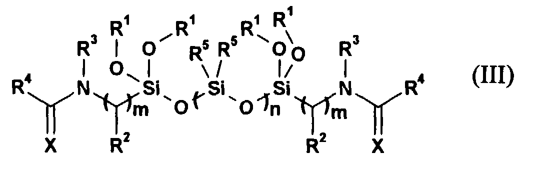 worin R¹ bis R⁵ sowie X und m die oben angegebene Bedeutung aufweisen und n Werte von 100 bis 1600 annimmt.

Die erfindungsgemäßen Polyorganosiloxane mit Dialkoxyorganosiloxy-Gruppen der allgemeinen Formel (I) können erhalten werden Umsetzung von Polyorganosiloxanen, welche mindestes eine siliciumgebundene Hydroxylgruppe aufweisen, mit Alkoxysilanen der allgemeinen Formel (IV) 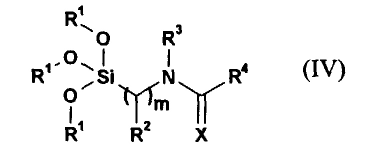 worin R¹ bis R⁴ und X sowie m die oben angegebenen Bedeutung aufweisen, und/oder dessen partiellen Hydrolysaten.

Als Polyorganosiloxane, welche mindestens eine siliciumgebundene Hydroxylgruppe aufweisen, werden vorzugsweise hydroxyterminierte Polydiorganosiloxane der allgemeinen Formel (V)

HO(SiR⁵₂O)ₙH (V)

verwendet, wobei R⁵ und n die oben angegebene Bedeutung haben.

Die eingesetzten Polyorganosiloxane, welche mindestens eine siliciumgebundene Hydroxylgruppe aufweisen, insbesondere diejenigen der allgemeinen Formel (V), sind bekannt. Üblicherweise werden sie entweder durch Polymerisation von cyclischen Siloxanen in Gegenwart stark basischer Katalysatoren und geringer Mengen Wasser oder durch Polykondensation von kurzkettigen linearen Oligomeren mit OH-Endgruppen hergestellt. Da die zur Synthese verwendeten Ausgangsverbindungen neben den hauptsächlich erwünschten difunktionellen Einheiten aber auch noch tri- und tetrafunktionelle Einheiten enthalten können, sind stets auch Verbindungen in den Polymeren enthalten, die eine oder auch mehrere Verzweigungen im Molekül enthalten. Je größer der Gehalt an tri- oder tetrafunktionellen Einheiten in den Ausgangsmaterialien und je größer die Molmasse des Polymeren ist, desto größer wird die Wahrscheinlichkeit, dass die Moleküle Verzweigungsstellen enthalten. Bevorzugte Substituenten R⁵ sind Methyl-, Ethyl-, Phenyl-, Vinyl- und Trifluorpropylreste. Besonders bevorzugt sind wegen der leichten Verfügbarkeit α,ω-Dihydroxypolydimethylsiloxane, bei denen in der Formel (V) n Werte von 100 bis 1600 annimmt. Obwohl die Verwendung rein linearer Polymere bevorzugt ist, können auch solche Polymere verwendet werden, die Verzweigungsstellen enthalten.

Als Alkoxysilane der allgemeinen Formel (IV) werden solche Verbindungen verwendet, die als Rest R¹ keine Silylgruppe gebunden haben, bzw. deren partielle Hydrolysate. Bevorzugt werden dabei N-1-(Triethoxysilyl)ethylpyrrolidon-(2), N-2-(Triethoxysilyl)ethylpyrrolidon-(2), N-1-(Triethoxysilyl)ethyl-N-methylacetamid oder N-2-(Triethoxysilyl)ethyl-N-methylacetamid oder deren Gemische eingesetzt. Beispiel für ein verwendetes partielles Hydrolysat von Alkoxysilanen der allgemeinen Formel (IV) ist 1,3-Bis(1'-N-Methylacetamidoethyl)-1,1,3,3,-tetraethoxydisiloxan.

Weiterhin können als Alkoxysilane der allgemeinen Formel (IV) die Umsetzungsprodukte von Alkoxysilanen der allgemeinen Formel (IV), die keine Silylgruppe enthalten, bzw. von deren partiellen Hydrolysaten mit Organosilanen oder mit deren partiellen Hydrolysaten der allgemeinen Formel (VI)

R⁵ₓSi(OR¹)₄₋ₓ (VI)

wobei R¹ und R⁵ die oben angeführte Bedeutung aufweisen und x Werte von 0 bis 3 annimmt, eingesetzt werden, beispielsweise 1-N-[(Methyldiethoxysiloxy)diethoxysilyl]ethylpyrrolidon-(2).

Als Organosilan der allgemeinen Formel (VI) sind bevorzugt Organotriethoxysilane und/oder Tetraethoxysilane, welche auch als Vernetzer in den RTV1-Systemen eingesetzt werden.

Weitere Beispiele für Alkoxysilane der allgemeinen Formel (IV) sind:

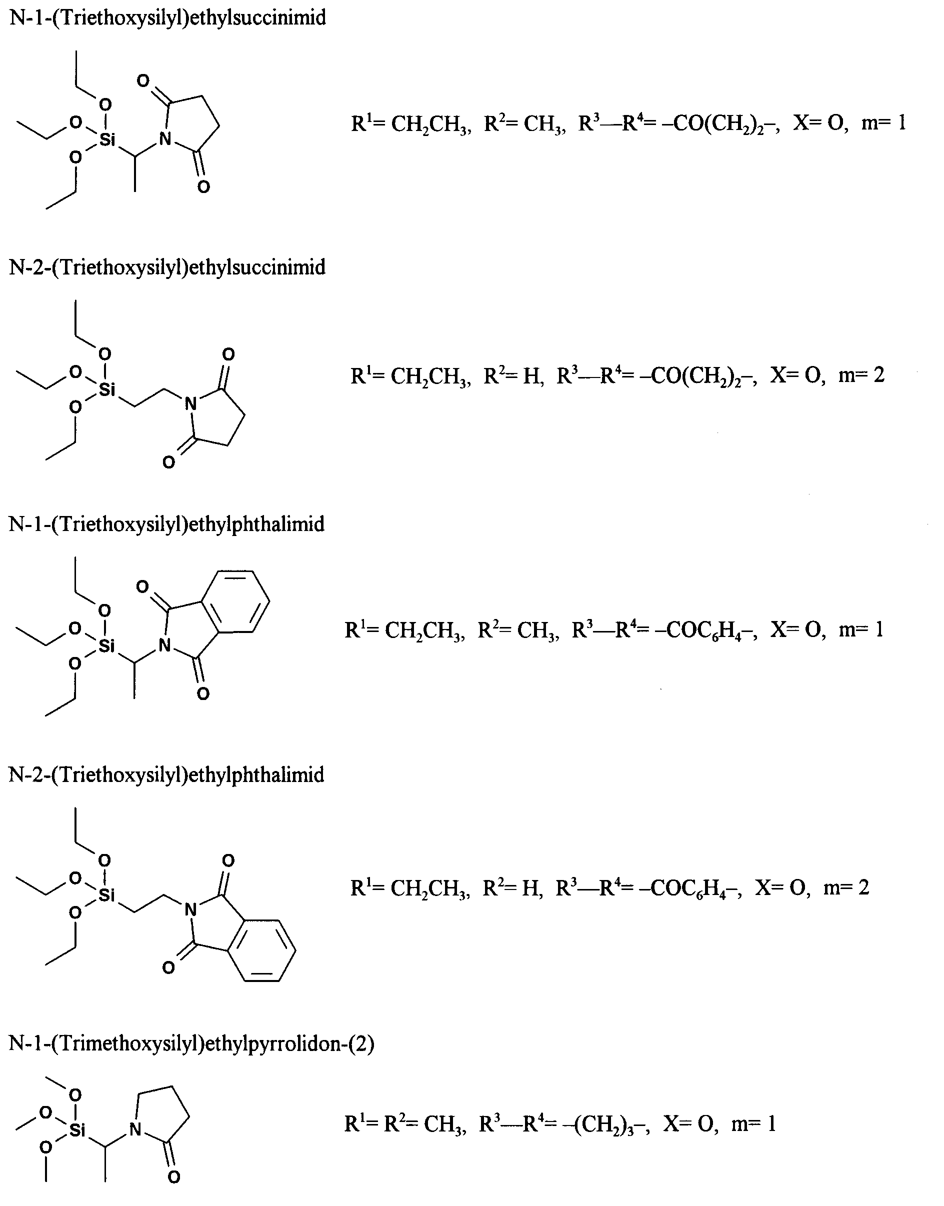

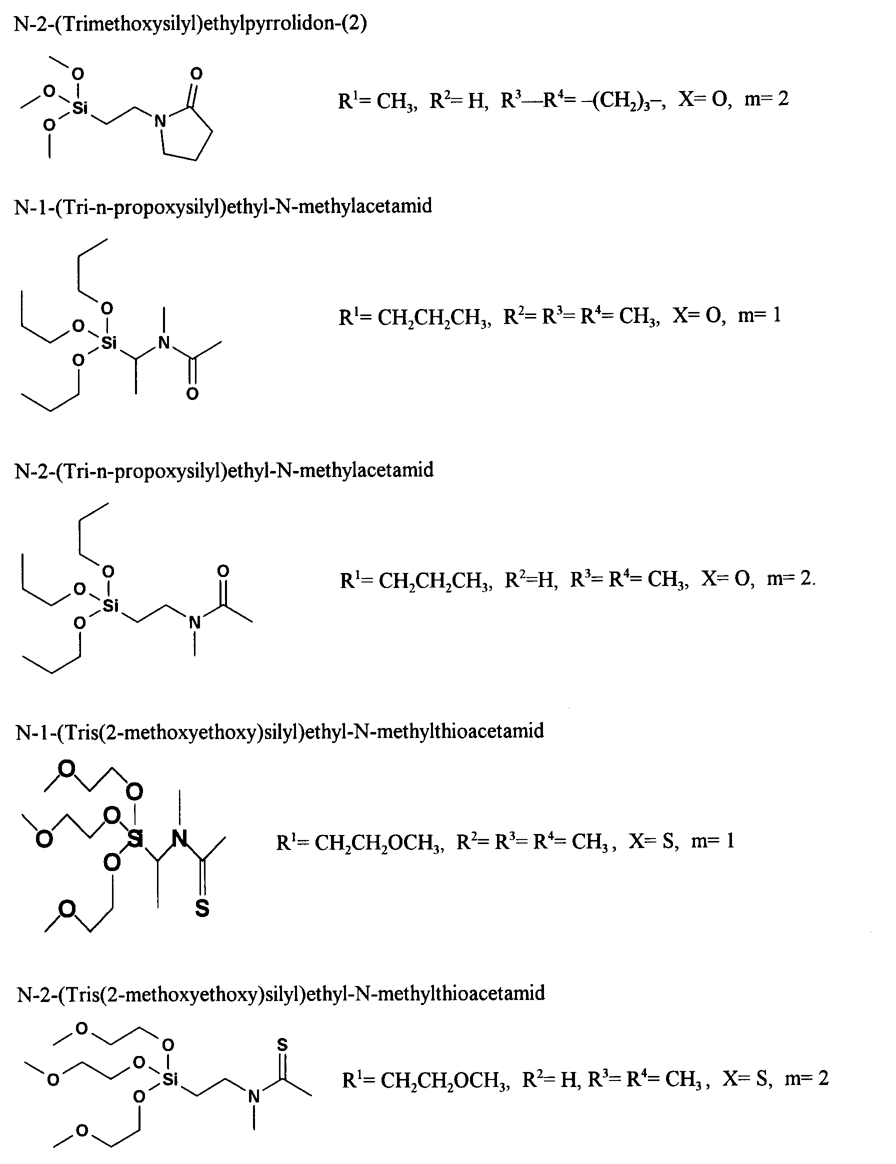

Diese Verbindung können auch als Gemische eingesetzt werden.

Sie werden beispielsweise erhalten durch Addition des entsprechenden Trialkoxysilans an das entsprechende N-vinylsubstituierte Amid.

Die einzusetzende Menge des Alkoxysilanes der allgemeinen Formel (IV) richtet sich nach dem Gehalt an siliciumgebundenen Hydroxylgruppen im Polyorganosiloxan und ist vom Fachmann auf die jeweiligen Verhältnisse leicht anzupassen. Vorzugsweise wird das Alkoxysilan der allgemeinen Formel (IV) in Mengen zwischen 0,1 und 10 Gew.-%, bevorzugt 1 bis 5 Gew.-%, bezogen auf das als Reaktionspartner verwendete Polyorganosiloxan, eingesetzt. Der nach dem Ende der Reaktion verbleibende Überschuß an Alkoxysilan kann im Produkt verbleiben oder abgetrennt und für eine weitere Umsetzung verwendet werden.

Die Reaktion zwischen dem Alkoxysilan und Polyorganosiloxan mit siliciumgebundenen Hydroxylgruppen läuft ohne zusätzlichen Katalysator bereits bei Raumtemperatur ab. Zur Beschleunigung kann die Reaktionstemperatur erhöht werden. Der bevorzugte Temperaturbereich beträgt 20°C bis 130°C, wobei Temperaturen zwischen 80°C und 110°C besonders bevorzugt sind. Zur weiteren Beschleunigung können bekannte Verbindungen, welche die Reaktion zwischen einem hydroxyterminierten Polyorganosiloxan und einem Alkoxysilan katalysieren, zugesetzt werden. Solche Verbindungen sind zum Beispiel NaOH oder KOH, Lithiumverbindungen, wie LiOH, Li-Silanolate, Alkalialkoholate, die zur Abschwächung der Reaktivität mit CO₂ oder Carbonsäuren versetzt wurden, Lewissäuren, wie z. B. Aluminiumchelate, Kombinationen von Säuren und Aminen oder Ammoniumcarbamate.

Die erfindungsgemäßen Polyorganosiloxane mit Dialkoxyorganosiloxy-Gruppen können als Polymere in RTV1-Siliconkautschuk-Mischungen eingesetzt werden.

Übliche weitere Bestandteile der RTV1-Mischungen sind Vernetzer, beispielsweise Alkoxysilane oder deren partielle Hydrolysate der allgemeinen Formel (VII)

R⁶ᵣSi(OR¹)₄₋ᵣ (VII)

worin R¹ die oben angegebenen Bedeutung hat und R⁶ ein substituierter oder unsubstituierte Alkyl-, Alkenyl oder Arylreste oder ein Rest der Struktur 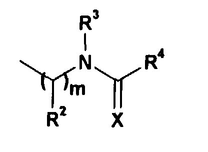 ist, wobei R², R³, R⁴, X und m die oben angegebene Bedeutung aufweisen. Bevorzugte Alkoxysilane sind Methyltriethoxysilan, Vinyltriethoxysilan, Tetraethoxysilan, Phenyltriethoxysilan, Tetrakis(2-methoxyethoxy)-silan, Tetrakis(2-butoxyethoxy)silan, N-1-(Triethoxysilyl)ethylpyrrolidon-(2), N-1-(Triethoxysilyl)ethyl-N-methylacetamid, N-2-(Triethoxysilyl)ethylpyrrolidon-(2) und N-2-(Triethoxysilyl)ethyl-N-methylacetamid. Es können auch beliebige Gemische der oben erwähnten Alkoxysilane als Vernetzer eingesetzt werden. Die gleiche Wirkung wird auch durch oligomere Hydrolysate/Kondensate aus einer oder einem Gemisch der oben erwähnten Verbindungen erzielt.

Weichmacher in RTV1-Systemen sind besonders bevorzugt trimethylsilylterminierte Polydimethylsiloxane mit Viskositäten zwischen 0,1 und 1 Pas. Außerdem können auch methylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Auch verzweigte Verbindungen können eingesetzt werden, die dadurch entstehen, daß in den zur Synthese der Weichmacher verwendeten Silanen noch tri- oder tetrafunktionelle Silane enthalten sind. Darüber hinaus ist es aber auch möglich, andere organische Verbindungen, wie z. B. bestimmte Kohlenwasserstoffgemische, als Weichmacher einzusetzen.

Um eine genügend hohe Vernetzungsgeschwindigkeit zu erreichen, werden den Systemen Vernetzungskatalysatoren zugesetzt. Üblich sind Dialkylzinnverbindungen, wie z. B. Dibutylzinndilaurat oder -diacetat, bzw. Titanverbindungen, wie Tetrabutyltitanat oder Titanchelate. Es können auch Katalysatorgemische eingesetzt werden.

Weiterhin können den RTV1-Systemen zur Erzielung bestimmter mechanischer Eigenschaften Füllstoffe mit hoher spezifischer Oberfläche, wie pyrogene Kieselsäure oder gefälltes Calciumcarbonat, zugesetzt werden. Darüber hinaus können Füllstoffe mit geringer spezifischer Oberfläche als Extender verwendet werden. Bevorzugt ist hierbei gemahlenes Calciumcarbonat.

Außer den beschriebenen können, in Abhängigkeit vom Verwendungszweck der RTV1-Systeme, weitere bekannte Zusätze, wie Farbpigmente, Haftvermittler und Fungizide, zugemischt werden.

Mit den erfindungsgemäßen Polyorganosiloxanen mit Dialkoxyorganosiloxy-Gruppen sind RTV1-Siliconkautschuk-Mischungen herstellbar, die mit hoher Geschwindigkeit und klebfrei aushärten. Die mechanischen Eigenschaften der Produkte entsprechend den Werten, wie sie für die bisher existierenden methoxyvernetzende Systeme erhalten werden. Der besondere Vorteil ist, daß man nun Systeme realisieren kann, bei deren Vernetzung nur Spaltprodukte entstehen, die völlig frei vom toxischen Methanol sind.

### Ausführungsbeispiele

### Beispiel 1

2000 g eines α,ω-Dihydroxypolydimethylsiloxans mit einer Viskosität von 50.000 mPas wurden mit 100 g N-1-(Triethoxysilyl)ethylpyrrolidon-(2), in dem 1 g Zinkacetylacetonat gelöst waren, versetzt. Nach einer Reaktionszeit von 2 Stunden bei 80 °C war die Reaktion abgeschlossen. Das überschussige Ethoxysilan wurde abdestilliert. Es blieb ein Polymer mit einer Viskosität von 57.000 mPas und einem OH-Gehalt von <30 mg/kg zurück.

### Beispiel 2

2000 g eines α,ω-Dihydroxypolydimethylsiloxans mit einer Viskosität von 50.000 mPas wurden mit 100 g N-1-(Triethoxysilyl)ethylpyrrolidon-(2) versetzt. Nach einer Reaktionszeit von 2 Stunden bei 130 °C war die Reaktion abgeschlossen. Das überschüssige Ethoxysilan wurde abdestilliert. Es blieb ein Polymer mit einer Viskosität von 53.500 mPas und einem OH-Gehalt von <30 mg/kg zurück.

### Beispiel 3

2000 g eines α,ω-Dihydroxypolydimethylsiloxans mit einer Viskosität von 50.000 mPas wurden mit 100 g N-1-(Triethoxysilyl)ethyl-N-methylacetamid, in dem 1 g Zinkacetylacetonat gelöst waren, versetzt. Nach einer Reaktionszeit von 2 Stunden bei 80 °C war die Reaktion abgeschlossen. Das überschüssige Ethoxysilan wurde abdestilliert. Es blieb ein Polymer mit einer Viskosität von 57.000 mPas und einem OH-Gehalt von <30 mg/kg zurück.

### Beispiel 4

2 g 1,7-Dihydroxy-1,1,3,3,5,5,7,7-octamethyltetrasiloxan wurden mit 3,5 g N-1-(Triethoxysilyl)ethyl-N-methylacetamid, in dem 20 mg Zinkacetat gelöst waren, versetzt. Die Reaktion wurde mit Hilfe der ²⁹Si-NMR-Spektroskopie verfolgt. Nach einer Reaktionszeit von 24 h bei Raumtemperatur waren die OH-Gruppen quantitativ umgesetzt. Es hatten sich ausschließlich die gewünschten 1-(N-Methylacetamido)ethyldiethoxysiloxy-Endgruppen gebildet. Es wurden keine Ethoxydimethylsiloxy-Gruppen, die sich durch Umsetzung der OH-Gruppen mit Ethanol hätten bilden können, beobachtet. Es waren ebenfalls keine Triethoxysiloxy-Endgruppen, die durch Abspaltung von N-Methylacetamid aus dem eingesetzten N-1-(Triethoxysilyl)ethyl-N-methylacetamid entstanden sein könnten, nachweisbar.

### Beispiel 5

Der Versuch des Beispiels 4 wurde unter Verwendung von N-1-(Triethoxysilyl)ethylpyrrolidon-(2) wiederholt. Auch bei dieser Umsetzung wurden ausschließlich die erwünschten Diethoxyorganosiloxy-Endgruppen gebildet.

### Beispiel 6

2 g 1,7-Dihydroxy-1,1,3,3,5,5,7,7-octamethyltetrasiloxan wurden mit 3,5 g N-1-(Tri-n-propoxysilyl)ethyl-N-methylacetamid versetzt. Nach einer Reaktionszeit von 24 h bei Raumtemperatur waren die OH-Gruppen quantitativ umgesetzt. Wie an den ²⁹Si-NMR-Spektren festgestellt werden konnte, hatten sich ausschließlich die gewünschten 1-(N-Methylacet-amido)ethyldi-n-propoxysiloxy-Endgruppen gebildet. Es wurden keine n-Propoxydimethylsiloxy-Gruppen, die sich durch Umsetzung der OH-Gruppen mit n-Propanol hätten bilden können, beobachtet. Es waren ebenfalls keine Tri-n-propoxysiloxy-Endgruppen, die durch Abspaltung von N-Methylacetamid aus dem eingesetzten N-1-(Tri-n-propoxysilyl)ethyl-N-methylacetamid entstanden sein könnten, nachweisbar.

### Beispiel 7

Ein Gemisch aus 11,8 g Methyltriethoxysilan und 14,9 g N-1-(Triethoxysilyl)ethyl-N-methylacetamid wurde mit 1,1g Wasser in 10 ml Ethanol versetzt. Nach 24 Stunden wurde das gebildete zusammen mit dem als Lösungsmittel zugesetzten Ethanol abdestilliert. Es verblieben 20,5g eines oligomeren Hydrolysats, das aus 34 Gew.-% Methyltriethoxysilan, 8 Gew.-% N-1-(Triethoxysilyl)ethyl-N-methylacetamid, 27 Gew-% N-1-[(Diethoxymethylsiloxy)diethoxysilyl]ethyl-N-methylacetamid, 8 Gew.-% 1,3-Bis(1'-(N-methylacetamido)ethyl-1,1,3,3-tetraethoxydisiloxan und 23 Gew-% höheren oligomeren Hydrolyse/Kondensationsprodukten des N-1-(Triethoxysilyl)ethyl-N-methylacetamids bestand. Die Zusammensetzung wurde mittels ²⁹Si-NMR-Spektroskopie ermittelt.

20g dieses oligomeren Gemisches wurden mit 100g eines α,ω-Dihydroxypolydimethylsiloxans mit einer Viskosität von 20.000 mPas versetzt. Nach einer Reaktionszeit von 2 Stunden bei 110 °C war die Reaktion abgeschlossen. Es blieb ein Polymer mit einer Viskosität von 27.000 mPas und einem OH-Gehalt von <30 mg/kg zurück.

### Beispiel 8

473 g des gemäß Beispiel 1 hergestellte Polymers, 350 g eines methylendständigen Polydimethylsiloxans mit einer Viskosität von 100 mPas, 103 g einer mit Hexamethyldisilazan hydrophobierten pyrogenen Kieselsäure mit einer Oberfläche von ca. 200 m²/g, 41g Methyltriethoxysilan und 12 g Bis(ethylacetoacetato)diisobutoxytitanat wurden mit einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Beispiel 9

473 g des gemäß Beispiel 1 hergestellte Polymers, bei dem jedoch der Überschuß an Ethoxysilan nicht entfernt wurde, 350 g eines methylendständigen Polydimethylsiloxans mit einer Viskosität von 100 rnPas, 164 g einer mit Hexamethyldisilazan hydrophobierten pyrogenen Kieselsäure mit einer Oberfläche von ca. 200 m²/g, 25 g Methyltriethoxysilan und 37 g Bis(ethylacetoacetato)diisobutoxytitanat wurden mit einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Beispiel 10

473 g des gemäß Beispiel 3 hergestellte Polymers, bei dem jedoch der Überschuß an Ethoxysilan nicht entfernt wurde, 350 g eines methylendständigen Polydimethylsiloxans mit einer Viskosität von 100 rnPas, 103 g einer mit Hexamethyldisilazan hydrophobierten pyrogenen Kieselsäure mit einer Oberfläche von ca. 200 m²/g, 25 g Methyltriethoxysilan und 37 g Bis(ethylacetoacetato)diisobutoxytitanat wurden mit einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Vergleichsbeispiel 11

Um die Kennwerte der in den vorangegangenen Beispielen erhaltenen Massen vergleichen zu können, wurde eine Mischung hergestellt, die die bisher bekannten Rohstoffe enthält, aber methoxyvernetzend ist, d.h. es entsteht bei der Aushärtung eine erhebliche Menge Methanol.
1150 g eines methoxyterminierten Polymers, das durch Umsetzung eines α,ω-Dihydroxypolydimethylsiloxans mit einer Viskosität von 50.000 mPas und Methyltrimethoxysilan in Gegenwart von Zinkacetylacetonat bei 80°C hergestellt wurde, 850 g eines methylendständigen Polydimethylsiloxans mit einer Viskosität von 100 mPas, 400 g einer mit Hexamethyldisilazan hydrophobierten pyrogenen Kieselsäure mit einer Oberfläche von ca. 200 m²/g, 80 g Methyltrimethoxysilan und 30 g Bis(ethylacetoacetato)diisobutoxytitanat wurden mit einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

**Tabelle 1**

| **Kennwert** | **Methode** | **Bsp. 8** | **Bsp. 9** | **Bsp. 10** | **Vbsp. 11** |
|---|---|---|---|---|---|
| Hautbildungszeit [min] | | 20 | 30 | 30 | 20 |
| Zugfestigkeit [MPa] | DIN 53504 S2 | 1,28 | 1,26 | 0,87 | 1,45 |
| Reißdehnung [%] | DIN 53504 S2 | 883 | 650 | 473 | 630 |
| Spannung bei 100% Dehnung [MPa] | DIN 53504 S2 | 0,25 | 0,41 | 0,29 | 0,32 |
| Härte [Shore-A] | DIN 53505 | 13 | 23 | 13 | 17 |

Die Hautbildungszeit wurde sofort nach Herstellung des Produktes gemessen. Die mechanischen Kennwerte (Zugfestigkeit, Reißdehnung, Spannung bei 100 % Dehnung und Härte) wurden nach 7-tägiger Aushärtung bei 23 °C und 50 % relativer Luftfeuchtigkeit ermittelt.

## Patentansprüche

1. Polyorganosiloxane mit mindestens einer Dialkoxyorganosiloxy-Gruppe der allgemeinen Formel (I) 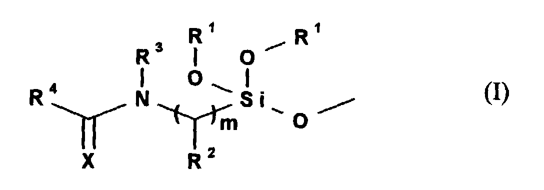 worin R¹ unabhängig voneinander unsubstituierte und/oder substituierte Alkyl- und/oder Silylreste, R² unabhängig voneinander unsubstituierte und/oder substituierte, gesättigte und/oder ungesättigte Alkyl- und/oder Arylreste und/oder Wasserstoff, R³ unsubstituierte oder substituierte, gesättigte oder ungesättigte Alkyl-, Aryl- oder Acylreste oder Wasserstoff R⁴ unsubstituierte oder substituierte, gesättigte oder ungesättigte Alkyl- oder Arylreste oder Wasserstoff und X Sauerstoff oder Schwefel bedeuten, wobei die Reste R³ und R⁴ alicyclische oder heterocyclische Ringe bilden können, und m entweder 1 oder 2 ist.

2. Polyorganosiloxane mit Dialkoxyorganosiloxy-Gruppen nach Anspruch 1, dadurch gekennzeichnet, dass die Dialkoxyorganosiloxy-Gruppe ein 1-(Pyrrolidin-2-on-1-yl)alkyldialkoxysiloxy- oder 2-(Pyrrolidin-2-on-1-yl)alkyldialkoxysiloxyrest ist.

3. Polyorganosiloxane mit Dialkoxyorganosiloxy-Grüppen nach Anspruch 1, dadurch gekennzeichnet, dass die Dialkoxyorganosiloxy-Gruppe ein 1-(N-Methylacetamido)alkyldialkoxysiloxy- oder 2-(N-Methylacetamido)alkyldialkoxysiloxyrest ist.

4. Polyorganosiloxane mit Dialkoxyorganosiloxy-Gruppen nach Anspruch 1, dadurch gekennzeichnet, dass das Polyorganosiloxan der allgemeinen Formel (II)
(SiZR⁵₂O_{1/2})ₐ (SiZR⁵O_{2/2})_{b} (SiZO_{3/2})_{c} (SiR⁵₂O_{2/2})_{d} (SiR⁵O_{3/2})ₑ (SiO_{4/2})_{f} (II)
entspricht, wobei R⁵ unabhängig voneinander unsubstituierte und/oder substituierte, gesättigte und/oder ungesättigte Alkyl- und/oder Arylreste und Z entweder R⁵ oder eine Dialkoxyorganosiloxy-Gruppe der allgemeinen Formel (I) mit der Maßgabe bedeutet, dass mindestens eine Dialkoxyorganosiloxy-Gruppe pro Molekül gebunden ist, a Werte von 1 bis 10, b und c unabhängig voneinander Werte von 0 bis 100, d Werte von 20 bis 2000 sowie e und f unabhängig voneinander Werte von 0 bis 100 annehmen.

5. Polyorganosiloxane mit Dialkoxyorganosiloxy-Gruppen nach Anspruch 1, dadurch gekennzeichnet, dass sie der allgemeinen Formel (III) 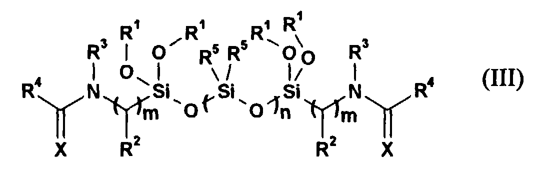 entsprechen, wobei R¹ bis R⁵ sowie X und m die oben angegebene Bedeutung aufweisen und n Werte von 100 bis 1600 annimmt.

6. Polyorganosiloxane mit Dialkoxyorganosiloxy-Gruppen nach Anspruch 1, erhalten durch Umsetzung von Polyorganosiloxanen, welche mindestes eine siliciumgebundene Hydroxylgruppe aufweisen, mit Alkoxysilanen und/oder dessen partiellen Hydrolysaten der allgemeinen Formel (IV) 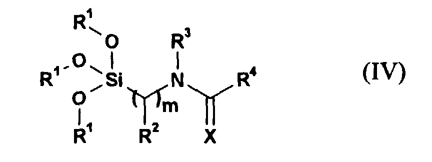 worin R¹ bis R⁴ und X sowie m die oben angegebene Bedeutung aufweisen.

7. Polyorganosiloxane nach Anspruch 6, dadurch gekennzeichnet, dass als Polyorganosiloxan, welches mindestens eine siliciumgebundene Hydroxylgruppe aufweist, der allgemeinen Formel (V)
HO(SiR⁵₂O)ₙH (V)
entspricht, wobei R⁵ und n die oben angegebene Bedeutung aufweisen.

8. Polyorganosiloxane nach Anspruch 6, dadurch gekennzeichnet, dass als Alkoxysilane der allgemeinen Formel (II) Verbindungen eingesetzt werden, bei welchen als Rest R¹ keine Silylgruppen gebunden sind, bzw. deren partielle Hydrolysate.

9. Polyorganosiloxane gemäß Anspruch 8, dadurch gekennzeichnet, daß als Alkoxysilan der allgemeinen Formel (IV) N-1-(Triethoxysilyl)ethylpyrrolidon-(2) oder N-2-(Triethoxysilyl)ethylpyrrolidon-(2) oder deren Gemische eingesetzt werden.

10. Polyorganosiloxane gemäß Anspruch 8, dadurch gekennzeichnet, daß als Alkoxysilan der allgemeinen Formel (IV) N-1-(Triethoxysilyl)ethyl-N-methylacetamid oder N-2-(Triethoxysilyl)ethyl-N-methylacetamid oder deren Gemische eingesetzt werden.

11. Polyorganosiloxane nach Anspruch 6, dadurch gekennzeichnet, dass die verwendeten Alkoxysilane der allgemeinen Formel (IV) Umsetzungsprodukte von Alkoxysilanen der allgemeinen Formel (IV), die keine Silylgruppe enthalten, bzw. von deren partiellen Hydrolysaten mit Organosilanen oder mit deren partiellen Hydrolysaten der allgemeinen Formel (VI)
R⁵ₓSi(OR¹)₄₋ₓ (VI)
sind, wobei R¹ und R⁵ die oben angeführte Bedeutung aufweisen und x Werte von 0 bis 3 annimmt.

12. Polyorganosiloxane gemäß Anspruch 11, dadurch gekennzeichnet, dass als Organosilan der allgemeinen Formel (VI) Organotriethoxysilane und/oder Tetraethoxysilan eingesetzt werden.

13. Polyorganosiloxane gemäß Anspruch 11, dadurch gekennzeichnet, dass als Alkoxysilan der allgemeinen Formel (IV) N-1-[(Methyldiethoxysiloxy)diethoxysilyl]ethylpyrrolidon-(2) eingesetzt wird.

14. Polyorganosiloxane nach Anspruch 6, dadurch gekennzeichnet, daß 0,1 bis 10 Gew.-% Alkoxysilan der allgemeinen Formel (IV), bezogen auf das Polyorganosiloxan, welches mindestens eine siliciumgebundene Hydroxylgruppe aufweist, eingesetzt werden.

15. Verwendung der Polyorganosiloxane mit Dialkoxyorganosiloxy-Gruppen der allgemeinen Formel (I) in RTV1-Siliconkautschuk-Mischungen.
